(19) Europäisches Patentamt
European Patent Office
Office européen des brevets

(11) Veröffentlichungsnummer: **0 205 047**
**B1**

(12) **EUROPÄISCHE PATENTSCHRIFT**

(45) Veröffentlichungstag der Patentschrift: **02.01.91**

(51) Int. Cl.⁵: **B 25 H 1/00, F 16 C 13/04**

(21) Anmeldenummer: **86107314.6**

(22) Anmeldetag: **30.05.86**

(54) Schwenkvorrichtung.

(30) Priorität: **07.06.85 US 742243**

(43) Veröffentlichungstag der Anmeldung:
**17.12.86 Patentblatt 86/51**

(45) Bekanntmachung des Hinweises auf die
Patenterteilung:
**02.01.91 Patentblatt 91/01**

(84) Benannte Vertragsstaaten:
**DE FR GB**

(56) Entgegenhaltungen:
US-A-1 721 424
US-A-1 834 294
US-A-2 769 349
US-A-2 879 059
US-A-2 990 171
US-A-4 452 558

(73) Patentinhaber: **DEERE & COMPANY**
**1 John Deere Road**
**Moline, Illinois 61265 (US)**

(72) Erfinder: **Gold, Raymond Dee**
**Route 1 Box 67A**
**Waukee Iowa 50263 (US)**
Erfinder: **Riegel, Leo William**
**410 S.E. Sixth Street**
**Ankeny Iowa 50021 (US)**

(74) Vertreter: **Feldmann, Bernhard et al**
**DEERE & COMPANY European Office, Patent**
**Department Steubenstrasse 36-42 Postfach 503**
**D-6800 Mannheim 1 (DE)**

Courier Press, Leamington Spa, England.

## Beschreibung

Die Erfindung betrifft eine Schwenkvorrichtung gemäß dem Oberbegriff des Patentanspruchs 1.

Eine Schwenkvorrichtung nach der US-A-2,769,349, die an Bohr- und Fräsmaschinen Verwendung findet, weist eine antriebsseitige Aufnahmevorrichtung in der Form eines Kegels auf, der in eine konisch verlaufende Bohrung in dem Werkstück eingesetzt wird. Um eine drehfeste Verbindung zwischen dem Werkstück und der drehbaren Aufnahmevorrichtung zu erzeugen, wird auf das Werkstück eine Klemme aufgeschraubt, die über einen Bolzen starr mit der Aufnahmevorrichtung verbunden wird. Gegenüber der Aufnahmevorrichtung ist eine Tragvorrichtung vorgesehen, die das andere Ende des Werkstücks drehbar aufnimmt. Damit der Kegel nicht in der Bohrung gleitet, muß auch die Tragvorrichtung mit einem Axial- und einem Radiallager, vorzugsweise einem weiteren Kegel, versehen sein. Demnach wird das Werkstück scheinbar zwischen Spitzen gelagert, was hinsichtlich der von Bohr- und Fräsmaschinen verlangten Präzision auch erforderlich ist.

Nachteilig ist diese Schwenkvorrichtung insofern, als das Werkstück zu seiner drehfesten Aufnahme konisch verlaufende Bohrungen aufweisen muß, in die die Kegel eingesetzt werden können, und ein Bolzen eingesetzt werden muß, um die drehfeste Verbindung zwischen dem Werkstück und der Aufnahmevorrichtung herzustellen. Das Aufsetzen des Werkstücks hat sehr umsichtig zu geschehen, da ansonsten die Kegel beschädigt werden, was jedoch schwierig sein kann, weil das meist schwere Werkstück zunächst auf die richtige Höhe abgesenkt und dann auf den festen Kegel aufgeschoben werden muß und anschließend erst der bewegliche Kegel der Aufnahmevorrichtung an dem Werkstück zur Anlage gebracht werden kann.

Bei der bekannten Schwenkvorrichtung gemäß US-A-4 452 558 sind sowohl an dem Antriebsende wie auch an dem Auflagerende jeweils zwei parallelachsige Rollen vorgesehen, die zwischen sich einen Wellenstummel eines Schwenkteils, beispielsweise den eines Turbinenläufers, aufnehmen. Während die auflagerseitigen Rollen frei drehbar sind, werden die antriebsseitigen Rollen über einen Motor und ein Getriebe in Drehung versetzt, um somit den auf ihnen liegenden Wellenstummel und mit diesem den Schwenkteil zu verschwenken.

Der Nachteil dieser Schwenkvorrichtung ist darin zu sehen, daß der aufliegende Schwenkteil relativ schwer sein muß, um eine ausreichend große Flächenpressung zwischen ihm und den Rollen aufzubauen, die gewährleistet, daß der Schwenkteil nicht auf den Rollen rutscht und somit nicht um das gewollte Maß verschwenkt wird. Insbesondere ist es nicht möglich, exzentrische Schwenkteile wie Rahmen, Kabinen oder sonstige Teile zu verschwenken, da bei diesen der Hebelarm der angreifenden Flächenlast variiert und somit keine gleichmäßige Belastung der Rollen zu erreichen ist. Außerdem kann aus der Umdrehungszahl der antriebsseitigen Rollen nur bedingt auf den Drehwinkel des Schwenkteils geschlossen werden, da bei einem Schlupf zwischen den Rollen und dem Schwenkteil die Beziehung der jeweiligen Drehzahlen nicht mehr stimmt.

Die der Erfindung zugrunde liegende Aufgabe wird gegenüber diesem Stand der Technik darin gesehen, eine Schwenkvorrichtung vorzuschlagen, auf die das Werkstück leicht aufgesetzt werden kann, bei der das Werkstück schnell in seine für die weitere Bearbeitung erforderliche richtige Lage gelangt und mit der das Werkstück um ein exaktes Maß schwenkbar ist.

Diese Aufgabe ist durch die Lehre des Patentanspruchs 1 gelöst.

Auf diese Weise wird das Werkstück in Verbindung mit dem Lager und dem Schwenkarm gebracht und anschließend auf die Rollen von oben her aufgesetzt; danach bringt es sich automatisch in die richtige Lage, sobald sich die Drehauflage in der Nut der Rollen zentriert. Weiterer Schritte bedarf es nicht.

Nach Anspruch 2 findet auf noch bessere Weise eine exakte und selbsttätige Positionierung des Schwenkteils in der Richtung der Schwenkachse statt.

Da aus unterschiedlichsten Gründen gelegentlich das Antriebsende und das Auflagerende nicht zueinander richtig ausgerichtet sind, ist es von Nutzen, die in den Ansprüchen 3 bis 6 beschriebenen Lehren entweder einzeln oder sogar gemeinsam zu befolgen, da dann der Schwenkteil auch bei geringfügigen Fluchtungsfehlern noch einwandfrei verschwenkt werden kann.

Die gemäß den Ansprüchen 7 und 8 vorgeschlagenen Verschleißbeläge führen auf vorteilhafte Weise dazu, daß die Kugelzapfen oder Kugelbolzen stets beibehalten werden können, während mittels der Verschleißbeläge das nach einer bestimmten Zeit entstandene Spiel ausgeglichen werden kann.

In der Zeichnung ist ein nachfolgend näher beschriebenes Ausführungsbeispiel der Erfindung dargestellt. Es zeigt:

Figur 1 eine Schwenkvorrichtung in Explosivdarstellung mit einem Antriebsende und einem Auflagerende,

Figur 2 das Auflagerende aus Figur 1 im Schnitt und in Vorderansicht,

Figur 3 das Antriebsende aus Figur 1 in Seitenansicht und

Figur 4 die Schwenkvorrichtung in Draufsicht.

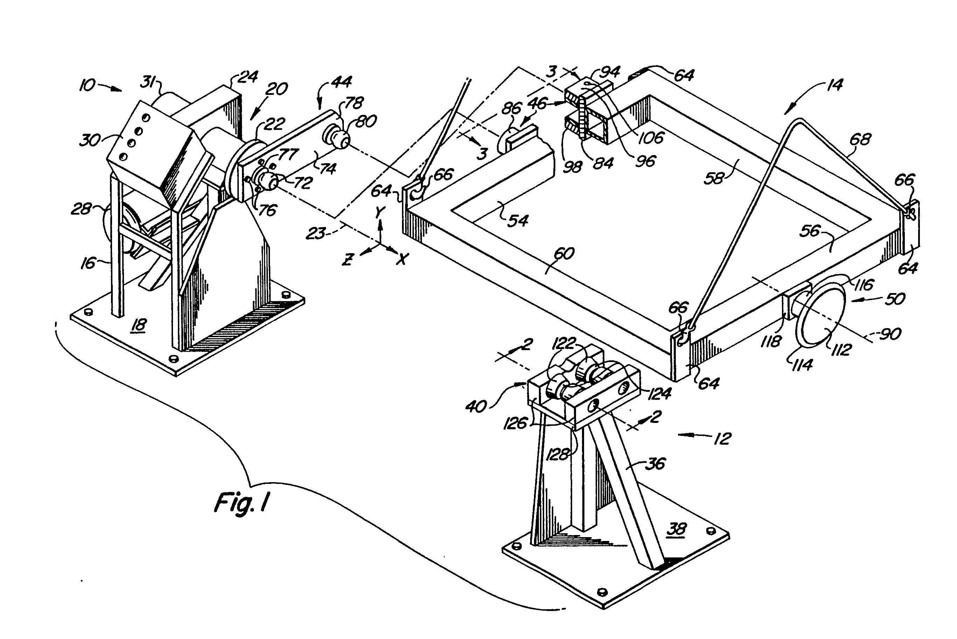

Aus Figur 1 ist eine Schwenkvorrichtung zu ersehen, die ein Triebgestell oder ein Antriebsende 10 und einen Reitstock oder ein Auflagerende 12 aufweist, die zueinander einen Abstand aufweisen, der ausreicht, um einen Aufnahmerahmen oder einen Schwenkteil 14 zur Aufnahme beliebiger Teile dazwischen aufzunehmen.

Das Antriebsende 10 enthält einen Hauptrahmen 16, der auf einer horizontalen Platte 18 gehalten ist. Ein mit 20 bezifferter Antrieb weist eine Drehplatte 22 mit einer Rotationsachse oder einer Schwenkachse 23 auf, die zum Betrieb mit einem von einem Motor 28 angetriebenen Servomotorantrieb 24 verbunden ist. Ein mit dem Servomotorantrieb 24 und einer Kodiervorrichtung 31 verbundenes Steuergerät 30 steuert genau die Drehbewegung der Drehplatte 22 zur exakten Positionierung des Schwenkteils 14.

Das Auflagerende 12 ist mit einem Ständer 36 versehen, der auf eine Platte 38 aufmontiert ist. Der obere Endbereich des Ständers 36 nimmt einen Stützrollenzusammenbau 40 auf, der im allgemeinen nach der Verlängerung der Schwenkachse 23 der dem Antriebsende 10 zugehörigen Drehplatte 22 ausgerichtet ist, sich jedoch geringfügig unterhalb von ihr erstreckt. Der Hauptrahmen 16 des Antriebsendes 10 und der Ständer 36 des Auflagerendes 12 sind entweder mittel- bzw. unmittelbar auf dem Boden befestigt, oder sie sind auf eine nicht dargestellte Hubvorrichtung aufmontiert, die ein gleiches Anheben oder Absenken des Antriebsendes 10 und des Auflagerendes 12 bewirkt. Eine derartige Hubvorrichtung kann dann von Vorteil sein, wenn der Abstand des Schwenkteils 14 zu dem Boden zu gering ist, um diesen vertikal schwenken zu können.

Der Zusammenbau des Antriebsendes 10 enthält einen Befestigungsteil 44, der an der Drehplatte 22 zum gemeinsamen Schwenken mit ihr angebracht ist, und einen Aufnahmeteil 46, der an dem dem Antriebsende 10 zugelegenen Endbereich des Schwenkteils 14 befestigt ist. Der Befestigungsteil 44 kann gleitend in den Aufnahmeteil 46 eingesetzt werden oder umgekehrt, und es ist somit eine befestigungsmittellose Anbringung des Schwenkteils 14 an dem Antriebsende 10 hergestellt. Der Zusammenbau des Auflagerendes 12 beinhaltet den Stützrollenzusammenbau 40 und eine mit diesem in Eingriff stehende Drehauflage 50, die an dem auflagerseitigen Ende des Schwenkteils 14 angeordnet ist. Die Vorkehrung des Stützrollenzusammenbaus 40 und der Drehauflage 50 ermöglichen es, auf einfache Weise das auflagerseitige Ende des Schwenkteils 14 auf den Stützrollenzusammenbau 40 abzusenken, worauf dieser in der gegebenen Stellung gehalten wird, wenn das antriebsseitige Ende in seine Endstellung gebracht worden ist.

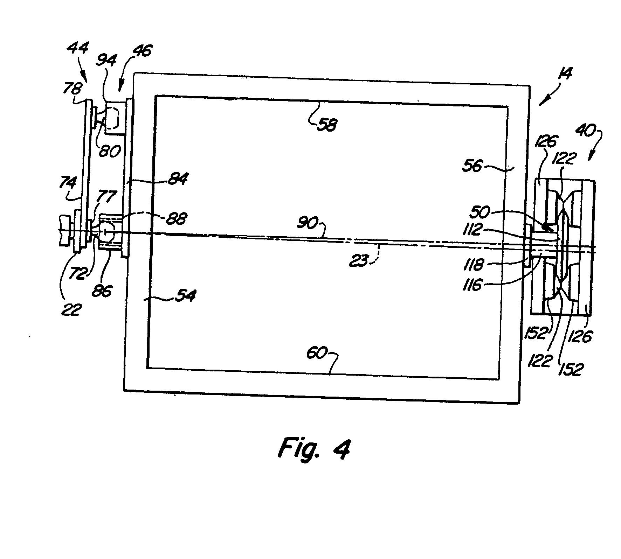

Der in der Figuren 1 und 4 dargestellte Schwenkteil 14 enthält erste und zweite Endteile 54 und 56, die durch Rahmen 58 und 60 in Abstand zueinander gehalten und verbunden werden, um einen im wesentlichen offenen und rechteckigen oder quadratischen Rahmen zu bilden, auf dem verschiedene Werkstücke aufmontiert werden können. Jedoch könnten auch Schwenkteile 14 mit einer anderen Form, wie etwa sich längs erstreckende Spindeln, Träger oder dergleichen, verwendet werden. Oder der zu schwenkende Teil wird direkt mit dem Aufnahmeteil 46 und der Drehauflage 50 verbunden. Wie am besten aus Figur 1 zu entnehmen ist, sind die Endteile 54 und 56 wie auch die Rahmen 58 und 60 aus Teilen mit einem rohrförmigen Querschnitt gebildet, und der antriebsseitige Aufnahmeteil 46 wie auch die auflagerseite Drehauflage 50 sind an die Außenseiten der Endteile 54 bzw. 56 angeflanscht. An den vier Eckbereichen des Schwenkteils 14 sind Laschen 64 zur Aufnahme von Haken 66 oder dergleichen vorgesehen, die an herkömmlichen Seilen oder sonstigen Aufhängevorrichtungen 68 zum sowohl vertikalen wie auch horizontalen Verfahren und Auflegen des Schwenkteils 14 auf das Antriebsende 10 und das Auflagerende 12 angebracht sind.

Der Befestigungsteil 44 ist mit einem Kugelzapfen 72 versehen, der eine oberflächengehärtete und verschleißfeste Außenfläche hat, der an der Drehplatte 22 befestigt und dessen Mittelpunkt auf der Schwenkachse 23 der Drehplatte 22 gelegen ist. Ein sich längs erstreckender Schwenkarm 74 ist an seinem inneren Ende mittels Schrauben 76 und nicht gezeigter Stifte oder Haltezapfen an der Drehplatte 22 befestigt und erstreckt sich von der Drehplatte 22 aus radial in einem hauptsächlich rechten Winkel zu der Schwenkachse 23 nach außen. An dem Kugelzapfen 72 ist eine Schulter 77 angebracht, die in einer gebohrten Ausnehmung in dem Schwenkarm 74 aufgenommen ist. Der Schwenkarm 74 endet an seinem anderen, also seinem äußeren Endbereich 78 mit einem Kugelbolzen 80, der einen verhältnismäßig großen radialen Abstand zu dem Kugelzapfen 72 aufweist. Der Aufnahmeteil 46 enthält eine Platte 84, die an der Außenseite des Endteils 54 angebracht ist und eine auf der Längsmitte des Endteils 54 angebrachte Büchse 86 trägt. Die Büchse 86 ist vorgesehen, um den Kugelzapfen 72 aufzunehmen und somit den Schwenkteil 14 gegenüber dem Antriebsende 10 quer zur Schwenkachse 23 festzulegen. Die Büchse 86 ist im wesentlichen ein zylindrischer Teil mit geraden Wänden, und ihr Innendurchmesser ist ungefähr gleich, jedoch geringfügig größer als der Außendurchmesser des Kugelzapfens 72. Der Kugelzapfen 72 und die Büchse 86 legen den Endteil 54 in den in Figur 1 gezeigten Y- und Z-Richtungen mit Bezug auf die Schwenkachse 23 des Antriebsendes 10 mittig fest. In dem bevorzugten Ausführungsbeispiel ist die Büchse 86 mit einem inneren gehärteten Verschleißbelag 88, also einer Verschleißbüchse, versehen. Die in Figur 4 angedeutete Achse 90 erstreckt sich durch den Mittenbereich des Schwenkteils 14 und durch den Mittelpunkt der Drehauflage 50.

Der Aufnahmeteil 46 beinhaltet zudem eine mit einer Bahn oder dergleichen versehene Kugelbolzenaufnahme 94, die radial nach außen von der Büchse 86 angeordnet ist und zur Aufnahme des Kugelbolzens 80 dient. Diese Kugelbolzenaufnahme 94 ist mit vertikal voneinander entfernt liegenden Schienen 96 und 98 versehen, die auf der platte 84 parallel zueinander befestigt sind. Flache Verschleißbeläge 102 und 104 sind an den Innenseiten der Schienen 96 und 98 befestigt, und zwar beispielweise mit Innensechskantschrauben 106. Die Verschleißbeläge 102 und 104 weisen einen genügenden Abstand zueinander auf, um die Aufnahme des Kugelbolzens 80 in die Kugelbolzenaufnahme 94 zu ermöglichen, zugleich aber auch eine enge Passung zwischen dem Kugelbolzen 80 und der Kugelbolzenaufnahme 94 zu gewährleisten, so daß der Schwenkteil 14 in die gleiche Winkelstellung gedrängt wird wie der Schwenkarm 74. Das Zusammenwirken des Kugelbolzens 80 und der Kugelbolzenaufnahme 94 erlaubt eine gewisse Bewegung des Endteils 54 des Schwenkteils 14 weg von und hin zu dem Schwenkarm 74, während das Zusammenwirken des Kugelzapfens 72 und der Büchse 86 den Endteil 54 des Schwenkteils 14 auf der Schwenkachse 23 festlegt.

Die Drehauflage 50 ist mittig auf dem auflagerseitigen Ende des Endteils 56 des Schwenkteils 14 festgelegt und weist eine scheibenförmige, konische Rolle 112 mit einer Zentrumsachse auf, die mit der Achse 90 der Büchse 86 zusammenfällt. Die Rolle 112 enthält einen äußeren Konusabschnitt 114 und wird getragen von einem Abstandshalter oder einem zylindrischen Schaft 116, der an einer Platte 118, die selbst wiederum an der Außenseite des Endteils 56 befestigt ist, gehalten ist. Zur Befestigung der Rolle 112 sind demontierbare Kopfschrauben 119 vorgesehen, die eine an den Schaft 116 angeschweißte Scheibe 120 durchdringen. Auf diese Weise können nach einer Demontage der Kopfschrauben 119 auch andere Adapter an den Schwenkteil 14 angeschraubt werden, die eine andere Verwendung des Schwenkteils 14 zulassen.

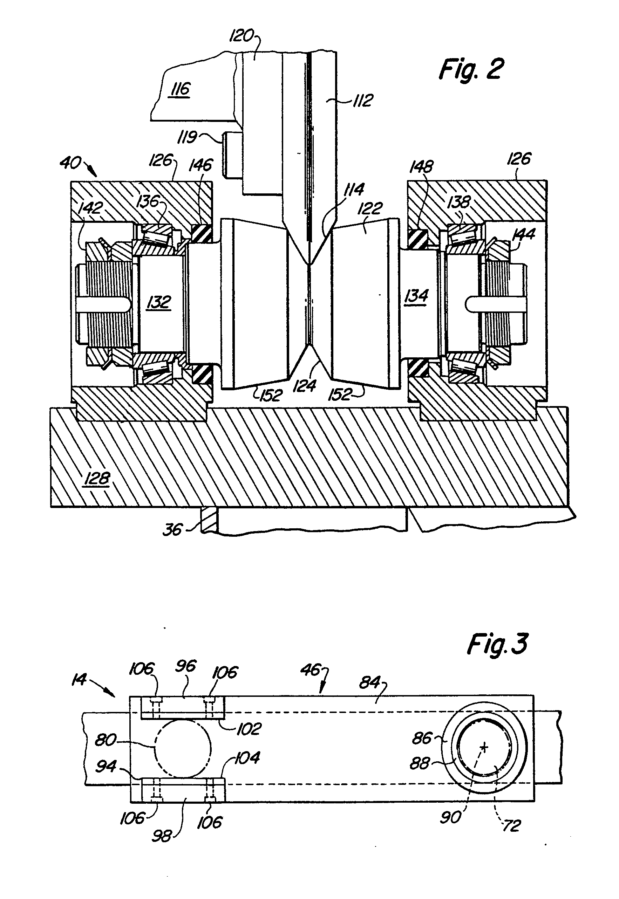

Der Stützrollenzusammenbau 40 ist mit einem Paar im allgemeinen identischer und parallelachsiger Konusrollen 122 ausgestattet, die in horizontaler Richtung voneinander getrennt sind und eine Nut 124 enthalten, die die Form eines -V- hat und deren Neigung im wesentlichen gleich dem Neigungswinkel des Konusabschnittes 114 der Rolle 112 ist. Die Konusrollen 122 sind zur Drehung um im wesentlichen waagrechte und voneinander getrennte Achsen in Lagerblöcken 126 gehalten, die mit einem Abstand zueinander auf einer waagrechten Platte 128 auf dem Ständer 36 des Auflagerendes 12 befestigt sind. Die Konusrollen 122 enthalten sich axial erstreckende Wellen 132 und 134, wie dies insbesondere aus Figur 2 zu ersehen ist, die von Kegelrollenlagern 136 und 138 getragen werden, wobei die Kegelrollenlager 136 und 138 in axialer Richtung mittels Schraubvorrichtungen 142 und 144 vorgespannt sind. Zwischen den Kegelrollenlagern 136 und 138 und den Konusrollen 122 sind nachgiebige Dichtungen 146 und 148 vorgesehen. In dem bevorzugten Ausführungsbeispiel beträgt der Winkel des Konusabschnitts 114 wie auch der der Nut 124 ungefähr sechzig Grad. In alternativer Ausführung kann die Rolle 112 an ihrem Rand auch halbrundförmig auslaufen, anstatt geradlinig wie bei dem gezeigten Konusabschnitt 114, um somit einen Verschleiß an den Konusrollen 122 bei Fluchtungsfehlern des Schwenkteils 14 zu vermeiden oder zu reduzieren. Außerdem ist mindestens eine der Konusrollen 122 in axialer Richtung, also entlang der X-Richtung, festgelegt, um die Rolle 112 und somit den Schwenkteil 14 linear, d. h. axial, exakt festlegen zu können. Im Bedarfsfall kann auch eine der Konusrollen 122 und das ihr zugehörige Kegelrollenlager in einer Hülse aufgenommen sein, die in dem Lagerbock 126 axial beweglich ist, um so ein geringfügiges seitliches Ausweichen der Rolle 112, das dann auftritt, wenn die Schwenkachse 23 und die Achse 90 nicht miteinander fluchten, beispielsweise wenn das Antriebsende 10 und das Auflagerende 12 nicht aneinander ausgerichtet sind, zu verhindern. Es hat sich jedoch gezeigt, daß auch zwei axial fest gelagerte Konusrollen 122 tadellos und ohne festzuhängen arbeiten, und zwar auch dann, wenn der Fluchtungsfehler des Antriebsendes 10 und des Auflagerendes 12 mehrere Centimeter beträgt.

Wenn der Schwenkteil 14 auf das Antriebsende 10 und das Auflagerende 12 aufgesetzt ist, wird die Rolle 112 zwischen den Konusrollen 122 gehalten. Die Konusrollen 122 sind derart montiert, daß dann, wenn das Antriebsende 10 und das Auflagerende 12 richtig angeordnet sind, der Schwenkteil 14 derart zu liegen kommt, daß die Achse 90, die sich durch die Büchse 86 und die Drehauflage 50 erstreckt, mit der Schwenkachse 23 zusammenfällt. Der Stützrollenzusammenbau 40 und die mit diesem kämmende Drehauflage 50 gewährleisten, daß der Schwenkteil 14 in axialer Richtung, also entlang der X-Achse, genau festgelegt ist, da der Konusabschnitt 114 in der Nut 124 der Konusrollen 122 gehalten ist. Der Stützrollenzusammenbau 40 und die Drehauflage 50 gewährleisten auch, daß der Schwenkteil 14 in Y- und Z-Richtung vermittelt wird. Jede der Konusrollen 122 enthält einen nach außen konisch verlaufenden Bereich 152, der geringfügig in Richtung auf die Nut 124 abfällt, um die Führung der Rolle 112 in ihre Endlagestellung zwischen den Konusrollen 122 zu unterstützen, wenn der Schwenkteil 14 auf den Stützrollenzusammenbau 40 abgesenkt wird. Es ist daher erkenntlich, daß der Schwenkteil 14 automatisch auf den Konusrollen 122 axial in die richtige Stellung geführt und in dieser exakt gehalten wird, sobald er auf das Auflagerende 12 abgelassen wird und nachdem die Rolle 112 in die Nut 124 eingesetzt ist. Aufgrund dieser Art von Festlegung und Orientierung des Schwenkteils 14 mittels der Rolle 112 werden schwerere Schwenkteile 14 besser festgelegt, und eine sichere und wiederholbare Auflegung des Schwenkteils 14 ist möglich.

Während des Einsatzes wird der Schwenkteil 14 mittels eines Seils oder einer Aufhängevorrichtung 68 aufgehoben und zu dem Antriebsende 10 gebracht, und zwar in einer Lage, die der Lage des Schwenkarmes 74 auf dem Befestigungsteil 44 im wesentlichen entspricht. Wie aus Figur 1 hervorgeht, sind sowohl der Schwenkarm 74 wie auch der Schwenkteil 14 mehr oder weniger horizontal gelegen. Davon ausgehend wird der Endteil 54 des Schwenkteils 14 dann horizontal in Richtung der X-Achse bewegt und gleichzeitig gesenkt, so daß die Büchse 86 des Aufnahmeteils 46 über den Kugelzapfen 72 auf dem Befestigungsteil 44 gleitet. Zur gleichen Zeit tritt der Kugelbolzen 80 auch in die Kugelbolzenaufnahme 94 ein. Diese Befestigungsart ermöglicht auch dann eine problemlose Verbindung des Befestigungsteils 44 mit dem Aufnahmeteil 46, wenn die Achse 90 des Schwenkteils 14 wie in Figur 2 gezeigt nicht mit der Schwenkachse 23 der Drehplatte 22 zusammenfällt. Die kugeligen Außenflächen des Kugelzapfens 72 und des Kugelbolzens 80 funktionieren als Ausrichtelemente, um die Büchse 86 und die Kugelbolzenaufnahme 94 reibungslos in die gewünschten Endlagen zu bringen. Nachdem der Aufnahmeteil 46 in bezug auf den Befestigungsteil 44 festgelegt ist, wird der Endteil 56 des Schwenkteils 14 abgesenkt, so daß die Rolle 112 mit den Konusrollen 122 in Eingriff gelangt, die die Drehauflage 50 automatisch in die Festhaltestellung zwischen den Konusrollen 122 führen.

Da und sobald die Rolle 112 in die Nuten 124 eintritt, wird der Schwenkteil 14 sowohl mittig als auch linear, d. h. entlang der X-Richtung, exakt festgehalten. Anschließend können die Aufhängevorrichtungen 68 entfernt werden. Der Kugelzapfen 72 und die Büchse 86 an dem antriebsseitigen Ende des Schwenkteils 14 gewährleisten, daß der antriebsseitige Endteil 54 exakt auf der Schwenkachse 23 der Drehplatte 22 zu liegen kommt. Wenn einmal die Rolle 112 die richtige Stellung auf dem Stützrollenzusammenbau 40 eingenommen hat, fällt die Achse 90 mit der Schwenkachse 23 zusammen - vorausgesetzt, daß das Antriebsende 10 und das Auflagerende 12 zueinander richtig angeordnet sind. Sollten aus irgendwelchen Gründen jedoch das Antriebsende 10 und das Auflagerende 12 nicht richtig aufgestellt sein, was etwa dann geschehen könnte, wenn das Antriebsende 10 und das Auflagerende 12 höhenverstellbar ausgebildet sind, dann wird ein Klemmen oder Festhängen des Schwenkteils 14, was auftreten könnte, wenn dieser starr über Bolzen mit dem Antriebsende 10 und dem Auflagerende 12 verbunden wäre, vermieden aufgrund des Zusammenwirkens des Stützrollenzusammenbaus 40 und der Drehauflage 50 und der ausrichtenden Verbindung des Befestigungsteils 44 und des Aufnahmeteils 46. Der Servomotorantrieb 24 wird über das Steuergerät 30 gesteuert, um den Schwenkteil 14 exakt in die gewünschte Stellung zu drehen, wie dies beim Schweißen mittels Robotern gefordert wird.

Um den Schwenkteil 14 zu entnehmen, werden die Aufhängevorrichtungen 68 wieder angebracht und die Rolle 112 von dem Stützrollenzusammenbau 40 angehoben. Anschließend wird der Schwenkteil 14 von dem Antriebsende 10 wegbewegt, und der Aufnahmeteil 46 kommt einfach frei von dem Kugelzapfen 72 und dem Kugelbolzen 80, so daß der Schwenkteil 14 vollkommen von der aus dem Antriebsende 10 und dem Auflagerende 12 bestehenden Schwenkvorrichtung gelöst ist, ohne daß hierfür Bolzen oder Schrauben oder dergleichen hätten gelöst werden müssen.

Die radial außerhalb liegende Kugelbolzenaufnahme 94 hält den Kugelbolzen 80 vorzugsweise in einem Bereich von wenigen Tausendstel Centimetern, was eine enorme Verringerung des Spiels bedeutet, das normalerweise bei herkömmlichen Schwenkvorrichtungen, bei denen der Schwenkteil 14 mittels Bolzen oder Schrauben so nahe wie möglich an die Schwenkachse 23 herangebracht wird, besteht. Auch die Toleranz zwischen dem Kugelzapfen 72 und der Büchse 86 liegt im Bereich weniger Tausendstel Centimeter.

Es ist möglich, den Kugelzapfen 72 und den Kugelbolzen 80 wie auch die Büchse 86 und die Kugelbolzenaufnahme 94 zu ersetzen. Da jedoch der Kugelzapfen 72 und der Kugelbolzen 80 teurer herzustellen sind, sollen diese bevorzugt an dem Antriebsende 10 verbleiben, während der Schwenkteil 14 mit kostengünstigeren Gegenteilen ausgerüstet wird. Auf diese Weise werden jeweils nur der Kugelzapfen 72 und der Kugelbolzen 80 für jede Schwenkvorrichtung unabhängig von der Anzahl der Schwenkteile 14, die mit der Schwenkvorrichtung gehandhabt werden sollen, benötigt.

**Patentansprüche**

1. Schwenkvorrichtung mit einem Antriebsende (10) zur Aufnahme eines Schwenkteils (14) einenends und mit einem Auflagerende (12) zur Aufnahme des Schwenkteils (14) anderenends, wobei an dem Antriebsende (10) ein Lager zum Festlegen des Schwenkteils (14) quer zu dessen Schwenkachse (23) und ein exzentrisch dazu angreifender, mit dem Schwenkteil (14) verbindbarer Schwenkarm (74) vorgesehen sind, dadurch gekennzeichnet, daß an dem Auflagerende (12) mindestens zwei parallelachsig zueinander angeordnete Rollen (122) vorgesehen sind, zwischen denen der Schwenkteil (14) anderenends schwenkbar aufgenommen ist, und daß die Rollen (122) mit einer Nut (124) und der Schwenkteil (14) auflagerseitig mit einer in die Nut (124) passenden, zumindest teilkreisförmigen Drehauflage (50) versehen sind, die gemeinsam ein Axiallager bilden und jeweils konisch ausgebildet sind.

2. Schwenkvorrichtung nach Anspruch 1, dadurch gekennzeichnet, daß die Rollen (122) seitlich der Nut (124) mit einer Neigung zu der Nut (124) hin konisch ausgebildet sind.

3. Schwenkvorrichtung nach Anspruch 1, dadurch gekennzeichnet, daß eine der Rollen (122) axial beweglich ist.

4. Schwenkvorrichtung nach Anspruch 1, dadurch gekennzeichnet, daß das Lager aus einer an dem Schwenkteil (14) befestigten Büchse (86) und einem an dem Antriebsende (10) befestigten und in die Büchse (86) in Richtung der Schwenkachse (23) einschiebbaren Kugelzapfen (72) besteht.

5. Schwenkvorrichtung nach Anspruch 1, dadurch gekennzeichnet, daß der Schwenkarm (74) einen Kugelbolzen (80) und der Schwenkteil (14) eine Kugelbolzenaufnahme (94) aufweist, in die der Kugelbolzen (80) einsetzbar ist.

6. Schwenkvorrichtung nach Anspruch 5, dadurch gekennzeichnet, daß der Kugelbolzen (80) in der Kugelbolzenaufnahme (94) senkrecht zu der Schwenkachse (23) des Schwenkteils (14) beweglich ist.

7. Schwenkvorrichtung nach Anspruch 4 und 5, dadurch gekennzeichnet, daß die Büchse (86) und die Kugelbolzenaufnahme (94) mit Verschleißbelägen (88, 102, 104) ausgekleidet sind.

8. Schwenkvorrichtung nach Anspruch 7, dadurch gekennzeichnet, daß die Verschleißbeläge (88, 102, 104) austauschbar sind.

9. Schwenkvorrichtung nach Anspruch 1 und 4, dadurch gekennzeichnet, daß eine sich durch den Mittelpunkt des Kugelzapfens (72) und den Mittelpunkt der Drehauflage (50) erstreckende Achse (90) mit der Schwenkachse (23) des Schwenkteils (14) zusammenfällt.

**Revendications**

1. Dispositif de pivotement comportant d'un côté une extrémité d'entraînement (10) servant à recevoir une partie pivotante (14) et d'un autre côté une extrémité de support (12) servant à recevoir la partie pivotante (14), et dans lequel il est prévu, sur l'extrémité d'entraînement (10), un palier servant à fixer la partie pivotante (14) transversalement par rapport à son axe de pivotement (23) et un bras pivotant (74) qui attaque cet arbre de façon excentrée et peut être relié à la partie pivotante (14), caractérisé en ce que sur l'extrémité de support (12) il est prévu au moins deux galets (122) disposés de telle sorte que leurs axes sont parallèles et entre lesquels d'autre part la partie pivotante (14) est logée de manière à pouvoir pivoter, et que les galets (122) comportent une gorge (124), et la partie pivotante (14) comporte, du côté du support, un support rotatif (50) qui s'engage d'une manière adaptée dans la gorge (124) et possède une forme au moins partiellement circulaire, la gorge et le support rotatif formant conjointement un palier axial et étant réalisés tous deux avec une forme conique.

2. Dispositif de pivotement selon la revendication 1, caractérisé en ce que les galets (122) possèdent, latéralement par rapport à la gorge (124), une forme conique inclinée en direction de la gorge (124).

3. Dispositif de pivotement selon la revendication 1, caractérisé en ce que l'un des galets (122) est déplaçable axialement.

4. Dispositif de pivotement selon la revendication 1, caractérisé en ce que le palier est constitué par un coussinet (86) fixé sur la partie pivotante (14) et par un pivot sphérique (72) fixé sur l'extrémité d'entraînement (10) qui peut être inséré dans le coussinet (86) dans la direction de l'axe de pivotement.

5. Dispositif de pivotement selon la revendication 1, caractérisé en ce que le bras pivotant (74) possède un boulon à rotule (80) et que la partie pivotante (14) comporte un logement du boulon à rotule (94), dans lequel le boulon à rotule (80) peut être inséré.

6. Dispositif de pivotement selon la revendication 5, caractérisé en ce que le boulon à rotule (80) est déplaçable dans son logement du boulon à rotule (94) perpendiculairement à l'axe de pivotement (23) de la partie pivotante (14).

7. Dispositif de pivotement selon les revendications 4 et 5, caractérisé en ce que le coussinet (86) et le logement du boulon à rotule (94) sont habillés de revêtements d'usure (88, 102, 104).

8. Dispositif de pivotement selon la revendication 7, caractérisé en ce que les revêtements d'usure (82, 102, 104) peuvent être remplacés.

9. Dispositif de pivotement selon les revendications 1 et 4, caractérisé en ce qu'un axe (90), qui passe par le centre du boulon à rotule (72) et par le centre du support rotatif (50), coïncide avec l'axe de pivotement (23) de la partie pivotante (14).

**Claims**

1. Swivelling device with a driving end (10) for receiving a swivelling part (14) at one end and a supporting end (12) for receiving the swivelling part (14) at the other end, a bearing for securing the swivelling part (14) transversely with respect to its swivelling axis (23) and a swivelling arm (74) acting eccentrically in relation thereto and connectable to the swivelling part (14) being provided at the driving end (10), characterised in that at least two rollers (122) are provided at the supporting end (12) with their axes arranged parallel to one another, the swivelling part (14) being received between the rollers to be swivellable at the other end, and the rollers (122) are provided with a groove (124) and the swivelling part (14) is provided at the supporting end with an at least partly circular pivoting support (50) fitting into the groove (124), the groove and the pivoting support together forming an axial bearing and being each of conical design.

2. Swivelling device according to claim 1, characterised in that the rollers (122) are of conical form laterally of the groove (124) with a slope towards the groove (124).

3. Swivelling device according to claim 1, characterised in that one of the rollers (122) is axially movable.

4. Swivelling device according to claim 1, characterised in that the bearing consists of a socket (86) fixed to the swivelling part (14) and a ball stud (72) fixed to the driving end (10) and insertable in the socket (86) in the direction of the swivelling axis (23).

5. Swivelling device according to claim 1, characterised in that the swivelling arm (74) has a ball pin (80) and the swivelling part (14) has a ball pin receptacle (94) into which the ball pin (80) can be inserted.

6. Swivelling device according to claim 5, characterised in that the ball pin (80) is movable in the ball pin receptacle (94) at right angles to the swivelling axis (23) of the swivelling part (14).

7. Swivelling device according to claims 4 and 5, characterised in that the socket (86) and the ball pin receptacle (94) are lined with wear linings (88, 102, 104).

8. Swivelling device according to claim 7, characterised in that the wear linings (88, 102, 104) are exchangeable.

9. Swivelling device according to claims 1 and 4, characterised in that an axis (90) extending through the centre of the ball stud (72) and the centre of the pivoting support (50) coincides with the swivelling axis (23) of the swivelling part (14).

Fig. 1

EP 0 205 047 B1

*Fig. 2*

*Fig. 3*

*Fig. 4*